# EUROPEAN PATENT SPECIFICATION

(11) **EP 2 926 981 B1**
(45) Date of publication and mention of the grant of the patent: **22.07.2020**
(21) Application number: 14192935.6
(22) Date of filing: 13.11.2014
(51) Int. Cl.: B29C 64/153, B33Y 10/00, B33Y 50/02, B29C 64/393

(54) **Three-dimensional molding equipment and manufacturing method for three-dimensionally shaped plastic object**
Einrichtung zur dreidimensionalen Formung und Verfahren zur Herstellung eines dreidimensional geformten Kunststoffgegenstands
Équipement de moulage tridimensionnel et procédé de fabrication d'un objet en plastique de forme tridimensionnelle

(30) Priority: 04.04.2014 JP 2014077413
(43) Date of publication of application: 07.10.2015
(73) Proprietor: Matsuura Machinery Corporation, Fukui City, Fukui (JP)
(72) Inventor: Maeda, Toshio, Fukui City, Fukui (JP); Ishimoto, Kousuke, Fukui City, Fukui (JP); Takezawa, Yasunori, Fukui City, Fukui (JP); Kato, Toshihiko, Fukui City, Fukui (JP); Amaya, Kouichi, Fukui City, Fukui (JP)
(74) Representative: Sloboshanin, Sergej

(56) References cited:
- DE-A1- 10 112 591
- DE-A1- 10 208 150
- DE-A1-102010 041 284

## Description

### BACKGROUND OF THE INVENTION

The present invention relates to a three dimensional molding equipment and a manufacturing method for a three-dimensionally shaped object, in which the three-dimensionally shaped plastic object is manufactured by laminating and sintering powder material.

### PRIOR ART

According to this kind of invention in the prior art, a three-dimensionally shaped plastic object including a number of sintered layers is manufactured by repeating a process of supplying powder material from a powder supply equipment to form a powder layer and a process of radiating a light beam or an electron beam to a predetermined region of the powder layer formed in the mentioned process to sinter the powder in the predetermined region.

Meanwhile, according to the above prior art, a galvano scanner device is used to radiate the light beam or electron beam in most cases. For example, Patent Document JP 2005-336547 A discloses an invention in which a light beam or an electron beam emitted from a laser oscillator (20) is reflected on a single galvano scanner device (scanner 22), and further radiated to a powder layer by changing the reflecting direction thereof. A molding path of the light beam or electron beam comprises a plurality of scanning routes and is preliminarily set and stored in a control circuit. Effects of this configuration are that a location radiated by the light beam or electron beam can be moved fast by the galvano scanner device and the molding time is shortened.

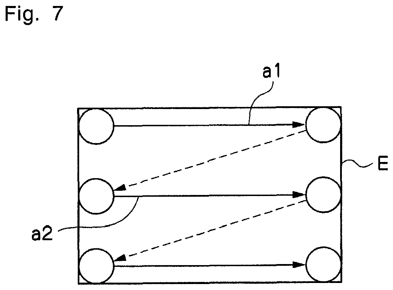

However, according to the prior art, as illustrated in FIG. 7, the galvano scanner device is operated so as to make a scanning route a1 linear and directed from one side to the other side. After that, one side of a light beam or electron beam oscillator is turned OFF and then a radiated location of the galvano scanner device is determined at a predetermined position on the one side (see dotted lines). Subsequently, the laser oscillator is again turned ON and the galvano scanner device is operated such that the scanning route is directed from the one side to the other side and a scanning route a2 becomes substantially parallel to the scanning route a1. Then, sintering is executed so as to hatch a region to be molded E on the powder layer by repeating the above scanning multiple times. Therefore, because of the waiting time for determining the radiated position multiple times, the molding time is prolonged.

Additionally, there is a time difference between the scanning at the beginning and the scanning at the end in the above scanning by the light beam or electron beam, and therefore, when the light beam or electron beam is located at the scanning route at the end, for example, the temperature in the scanning route may be increased by the light beam or electron beam. However, the temperature at the beginning of the scanning route may be decreased because the scanning route is cooled by ambient air. As a result, due to the above temperature difference, the temperature distribution in an entire plastic object may be uneven, and there is the possibility that a shape deformation such as warpage may occur in the plastic object.

From DE 101 12 591 A1 and DE 102 08 150 Al a three-dimensional molding device is known which is configured to produce a three-dimensional object layer-by-layer by irradiating a powder bed of material which forms the object with a laser beam. During object production the laser beam is deflected such that it follows a predetermined trajectory or molding path on the object surface. By scanning along the trajectory the laser beam generates a contour line on the object, wherein adjacent contour strips of the generated contour line overlap slightly.

DE 10 2010 041 284 Aldescribes a selective sintering technique, which uses a laser beam in order to deposit energy on a surface of an object to be formed for compacting the powdery material of the object. The laser beam is deflected to form a continuous molding path on the surface of the object to be formed.

### SUMMARY OF INVENTION

### Problems to be solved by the invention

The present invention is made in view of the above-described exemplary situation, and the object thereof is to improve the molding efficiency and to avoid the occurrence of a shape deformation in a plastic object.

To solve the above problems, a basic configuration according to the present invention includes:
(1) a three-dimensional molding equipment according to independent claim 4. and
(2) a method for manufacturing a three-dimensionally shaped plastic object according to independent claim 1.

### EFFECT OF THE INVENTION

According to the present invention based on the above basic configuration, molding efficiency is improved by radiating the light beam or electron beam in the continuous route, and also occurrence of shape deformation is avoided in the plastic object.

### BRIEF DESCRIPTION OF DRAWINGS

FIG. 1 is a perspective view schematically illustrating an example of a three-dimensional molding equipment according to the present invention.
FIG. 2 is a plane view illustrating an exemplary molding path.
FIG. 3 is a plane view illustrating a different exemplary molding path.
FIG. 4 is a plane view illustrating another different exemplary molding path.
FIGS. 5(a) and 5(b) are plane views illustrating two kinds of molding paths each having a different distance between scanning routes adjacent in an intersecting direction.
FIGS. 6(a) and 6(b) are plane views illustrating two kinds of molding paths each having a different distance between scanning routes adjacent in an intersecting direction.
FIG. 7 is a plane view illustrating a molding path according to the prior art.

### DETAILED DESCRIPTION

According to aspects of the configuration (1) related to the equipment included in the above basic configuration, a powder supply equipment is provided which includes a laminating process to form a powder layer; and a light beam or electron beam scanning unit which includes a sintering process to radiate a light beam or an electron beam to the powder layer and move a location radiated by the light beam or the electron beam to sinter the powder layer, wherein the laminating process and the sintering process are configured to alternately repeat, a molding path to comprise a plurality of scanning routes of the light beam or electron beam on the inside of an object to be molded is preliminarily set as a continuous route which does not pass the same line and does not form any intersection, and the light beam or electron beam by the light beam or electron beam scanning unit is continuously radiated along the molding path.

With this configuration, the molding path of the light beam or electron beam on the inside of the object to be molded is a continuous route which does not pass the same line and the light beam or electron beam is continuously radiated along this route. Therefore, the waiting time for a position adjustment according to the prior art is reduced, thereby achieving to shorten the molding time. Further, the same effects can be also achieved in the basic configuration (2) related to the method.

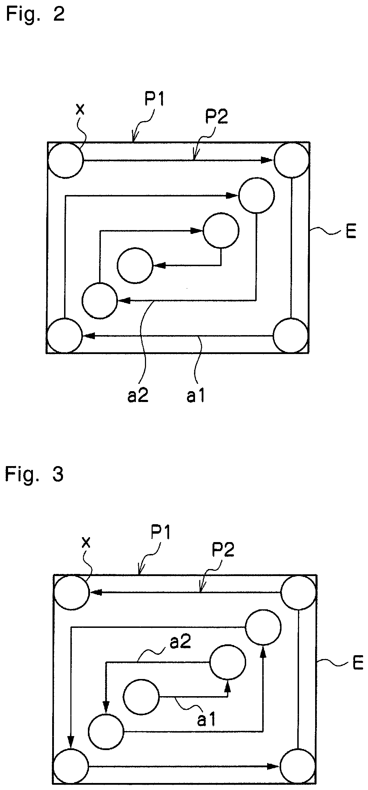

According to a first embodiment, the molding path is arranged such that a plurality of straight lines are connected at a predetermined angle and sequentially directed to the inside or sequentially directed to the outside, or arranged such that a single continuous curve line is sequentially directed to the inside or sequentially directed to the outside (see FIGS. 2 and 3. Note that FIGS. 2 and 3 represent the cases of adopting the straight lines.).

With this configuration, a deflection of the temperature distribution in a region to be molded can be reduced and a highly-qualified three-dimensionally shaped plastic object can be manufactured.

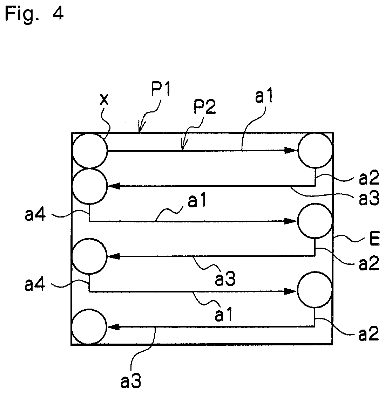

According to a second embodiment, the molding path includes a scanning pattern formed of: a first scanning route directed from one side to the other side; a second scanning route continued from the first scanning route and directed in a direction away from the first scanning route at a predetermined angle with respect to the first scanning route; a third scanning route continued from the second scanning route and directed from the other direction to the one direction at a predetermined angle with respect to the second scanning route; and a fourth scanning route continued from the third scanning route and directed in a direction away from the third scanning route at a predetermined angle with respect to the third scanning route, and further this scanning pattern can be repeatedly arranged (see FIG. 4).

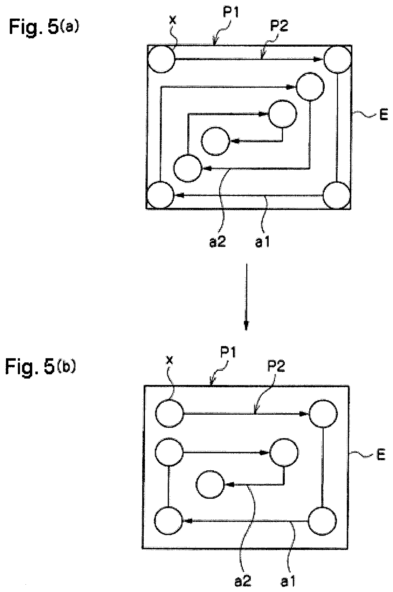

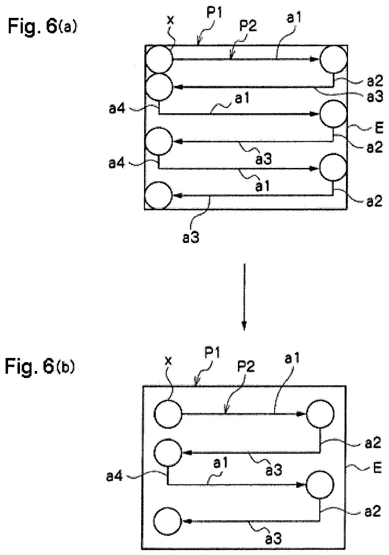

According to an aspect of the present invention, two scanning routes of the molding path adjacent each other formed of two straight lines or two curve lines are set, and further a distance between the adjacent scanning routes is formed larger than a radiation diameter of the light beam or electron beam (see FIGS. 5(a), 5(b), 6(a) and 6(b). Note that FIGS. 5(a), 5(b), 6(a) and 6(b) represent the cases of adopting the straight lines.).

With this configuration, an uneven temperature distribution can be reduced by the clearance formed between the scanning routes adjacent each other, and also the occurrence of a shape deformation, such as warpage, in the plastic object can be avoided.

Note that the distance is set larger than the radiation diameter of the light beam or electron beam and larger not more than ten-times of the radiation diameter of the same.

### EXAMPLES

### Example 1

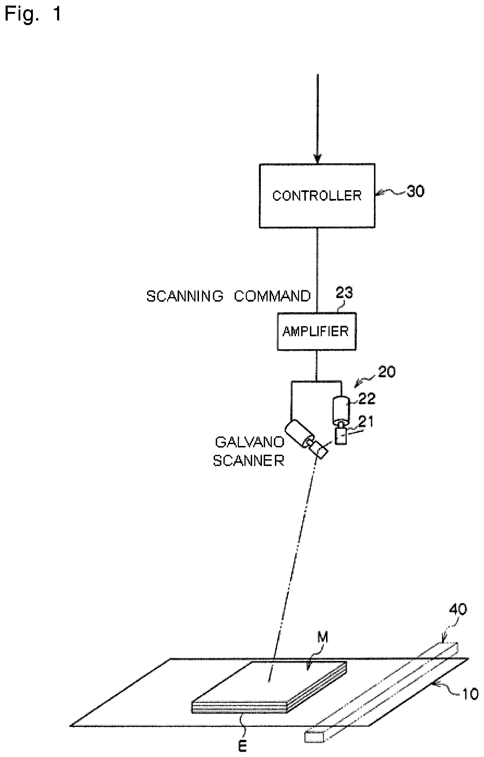

Examples illustrating aspects of the present invention will be described in detail based on the drawings as follows:
As illustrated in FIG. 1, a three-dimensional molding equipment 1 includes: a molding table 10 that can move vertically; a light beam or electron beam scanning unit 20 disposed above the molding table 10; a controller 30 that controls vertical movement of the molding table 10, operation of the respective light beam or electron beam scanning units 20, etc.; and a powder supply equipment 40 that supplies powder material on the molding table 10, in which a three-dimensionally shaped plastic object M is manufactured by alternately repeating a laminating process of supplying the powder material to form a powder layer, and a sintering process of radiating a light beam or an electron beam to the powder layer and moving a location radiated thereby to sinter the powder layer.

The molding table 10 is a table having an upper surface formed flat, and configured to move vertically by an elevating mechanism not illustrated.

The molding table 10 moves downward by a predetermined amount every time of repeating the processes of forming the powder layer and partially sintering the powder layer by the later-described powder supply equipment 40 and the light beam or electron beam scanning unit 20.

Meanwhile, as a different example, the molding table 10 may be fixed and not movable vertically, and the powder supply equipment 40 may be configured to move vertically.

The light beam or electron beam scanning unit 20 is a two-axis galvano scanner device in which the light beam or the electron beam radiated from a light beam or electron beam oscillator (not illustrated) is reflected by two reflection mirrors 21, 21 and radiated to the upper surface of the powder layer on the molding table 10, and further a location radiated thereby is moved in a planar direction.

Each of the light beam or electron beam scanning unit 20 makes the two reflection mirrors 21, 21 rotate respectively by motors 22, 22 in response to a scanning command from the controller 30. When the mirrors are rotated, scanning is executed by the light beam or the electron beam to be radiated to the upper surface of the powder layer in XY directions by setting, as a origin, a reference position on the molding table 10 imaged by an imaging device (not illustrated) such as a CCD camera.

Note that reference sign 23 in FIG. 1 indicates an amplifier that supplies amplified control voltage of the controller 30 to each of the light beam or electron beam scanning unit 20.

Further, the light beam or electron beam oscillator may be configured to radiate a laser beam emitted from a laser source to the reflection mirror 21 of the light beam or electron beam scanning unit 20.

The controller 30 is a control circuit including a storage unit that stores a processing program, processing data, etc., a CPU, an input/output interface, and so on, and may be formed of a micro-computer, a programmable controller, and other electronic circuits, for example.

The controller 30 receives data input including three-dimensional data (e.g., STL format data, etc.) generated by a CAD/CAM system not illustrated, data related to the radiation diameter of the light beam or electron beam, radiation output of the light beam or electron beam, and so on. Further, the controller 30 executes arithmetic processing based on the processing program which preliminarily stores the above-mentioned data, and controls the light beam or electron beam oscillator (not illustrated), the elevating mechanism (not illustrated) for the molding table 10, the light beam or electron beam scanning unit 20, etc. in accordance with results of the arithmetic processing.

As a means for changing the radiation diameter of the light beam or electron beam, an aperture mechanism capable of changing a beam diameter can be adopted in an optical path of the light beam or electron beam. The aperture mechanism may be provided with a mask plate including a plurality of diaphragm apertures having different diameters, and the plurality of diaphragm apertures may be configured to be selectively moved on the optical path of the light beam or electron beam by moving the mask plate.

Further, the powder supply equipment 40 is a known device that forms a substantially flat powder layer by supplying and squeezing metallic or non-metallic powder material on the flat surface while moving horizontally. The powder supply equipment 40 is configured to move substantially in the horizontal direction above the molding table 10 to form the powder layer on the upper surface of the molding table 10 and laminate additional powder layers over the formed powder layer.

Next, procedures for manufacturing a three-dimensionally shaped plastic object M by the three-dimensional molding equipment 1 will be described in detail.

First, the controller 30 actuates the powder supply equipment 40 based on the preliminarily stored processing program, and forms the powder layer on the molding table 10. Subsequently, the controller 30 actuates the light beam or electron beam scanning unit 20 to radiate the light beam or electron beam to the upper surface of the powder layer.

More specifically, the controller 30 sets a region to be molded E on the molding table 10 based on the three-dimensional data and the like as illustrated in FIG. 2.

The region to be molded E corresponds to a cross-section of a three-dimensionally shaped plastic object M to be manufactured by the three-dimensional molding equipment 1 taken along a plane parallel to the molding table 10, and the shape of the region to be molded E may be varied by each of the plurality of the powder layers or may be the same in each of the plurality of the powder layers, depending on the shape of the three-dimensionally shaped plastic object M.

Next, as illustrated in FIG. 2, the controller 30 radiates the light beam or electron beam to a predetermined position on the region to be molded E on the same powder layer by the light beam or electron beam scanning unit 20, and also controls operation of the light beam or electron beam scanning unit 20 such that a radiated portion x is moved along a preset molding path. The radiated portion x is a temporary region radiated by the light beam or electron beam on the powder layer, and has a radiation diameter adjusted by the aperture mechanism.

The molding path comprises a plurality of scanning routes for the light beam or electron beam set based on the three-dimensional data and the like, and stored in a predetermined storage area by the controller 30.

There are two kinds of molding paths: a vector molding path P1 for scanning the region to be molded E along the contour thereof by the light beam or electron beam; and a raster molding path P2 for scanning an inner region of the region to be molded E by the light beam or electron beam so as to hatch the mentioned region. The molding paths are set for the respective powder layers.

The vector molding path P1 is a continuous route formed in an endless ring along the contour of the region to be molded E.

Further, the raster molding path P2 is a continuous route which does not pass the same line and does not form any intersection. According to the example illustrated in FIG. 2, the raster molding path comprises a plurality of scanning routes a1, a2 being arranged such that a plurality of straight lines is connected at a predetermined angle (right angle in the case of FIG. 2) from the side close to the contour of the region to be molded E, and sequentially directed from the outside to the inside.

According to this example, the raster molding path P2 is set with a pitch between the scanning routes a1 and a2 on the outside and the inside such that the scanning routes a1 and a2 adjacent on the inside and outside are made to contact. In other words, the pitch is a substantially same size as the radiation diameter of the light beam or electron beam.

Further, the raster molding path P2 is formed spiral so as to hatch an entire region of the region to be molded E. Meanwhile, according to the example illustrated in FIG. 2, the raster molding path P2 is formed of a plurality of straight lines parallel to each of the sides of the region to be molded E shaped in a rectangle, but there is another example in which circles or ovals are combined to form a continuous single curve line from the outside to the inside, thereby forming the raster molding path P2 in a spiral curved line gradually directed to the center portion of the region to be molded E.

According to the example in FIG. 2, the radiation of the light beam or electron beam along the vector molding path P1 and raster molding path P2 is sequentially executed by a single light beam or electron beam scanning unit 20. However, there is another example in which two light beam or electron beam scanning units 20 are provided, and scanning along the vector molding path P1 may be executed by one of the two scanning units, and scanning along the raster molding path P2 may be executed by the other one.

The radiation of the light beam or electron beam is not interrupted in the midway of the route along the vector molding path P1 or the raster molding path P2 and is executed continuously.

When scanning by the light beam or electron beam is executed along the molding paths P1 and P2, the region to be molded E on the upper surface of the powder layer is sintered by the heat of the light beam or electron beam. After that, the controller 30 lowers the molding table 10 by the thickness of the powder layer to form a new powder layer on the upper surface of the powder layer including the region to be molded E by means of the powder supply equipment 40.

Then, the controller 30 sets a region to be molded E on the upper surface of the new powder layer in the same manner as in the process executed for the above-described first powder layer, and radiates the light beam or electron beam on the region to be molded E by the light beam or electron beam scanning unit 20 and also controls the operation of the light beam or electron beam scanning unit 20 so as to move the radiated portion x along the molding paths P1 and P2. As a result, the region to be molded E on the new powder layer is sintered, and further the sintered portion is incorporated to the sintered portion of the previous powder layer.

Afterward, the predetermined three-dimensionally shaped plastic object M (see FIG. 1) is manufactured by sequentially repeating the processes of lowering the molding table 10, forming the powder layer by the powder supply equipment 40, and sintering the powder layer by executing scanning with the light beam or electron beam of the light beam or electron beam scanning unit 20. Meanwhile, during the above processes, a cutting process is applied to an outer peripheral portion of the sintered layer with high accuracy by using a cutting device not illustrated, if necessary.

Therefore, according to the three-dimensional molding equipment 1 having the above-described configuration, the raster molding path of the light beam or electron beam on the inside of the object to be molded is configured to be a continuous route that does not pass the same line and does not form any intersection, and the radiation of the light beam or electron beam along the route is continuously executed without being turned OFF. As a result, the waiting time for the position adjustment and the like can be reduced and the molding time can be shortened.

Moreover, since scanning with the light beam or electron beam is executed in a spiral form, a region having increasing temperature within the region to be molded E is moved in a radial direction of the spiral raster molding path P2, and therefore a deflection of the temperature distribution inside the region to be molded E can be reduced and a shape deformation, such as warpage, can be avoided.

Next, a description will be given for other examples related to a means for continuously radiating the light beam or electron beam along the molding path having a continuous route that does not pass the same line. Note that the following examples are examples partially modified with respect to the above-described example 1, and therefore, the modified points will be mainly described, omitting repetition of the same detailed description.

### Example 2

According to an example illustrated in FIG. 3, a scanning direction of a spiral raster molding path P2 is configured in a direction opposite to the example 1. In other words, the raster molding path P2 according to this example is a continuous route which does not pass the same line and does not form any intersection, and is formed by connecting a plurality of straight lines at a predetermined angle (right angle in the case of FIG. 3) from a center portion of a region to be molded E and being arranged sequentially directed from the inside to the outside of the region to be molded E.

Therefore, according to the example illustrated in FIG. 3, the waiting time for the position adjustment and the like can be reduced and the molding time can be shortened same as the example 1. Further, a deflection of the temperature distribution can be reduced and a shape deformation, such as warpage, can be avoided.

### Example 3 (not according to the invention)

According to an example illustrated in FIG. 4, a raster molding path P2 includes: a scanning pattern formed of a first scanning route a1 directed from one side to the other side; a second scanning route a2 continued from the first scanning route a1 and directed in a direction away from the first scanning route at a predetermined angle (right angle in the case of FIG. 4) with respect to the first scanning route al; a third scanning route a3 continued from the second scanning route a2 and directed from the other direction to the one direction at a predetermined angle with respect to the second scanning route a2; and a fourth scanning route a4 continued from the third scanning route a3 and directed in a direction away from the third scanning route a3 at a predetermined angle (right angle in the case of FIG. 4) with respect to the third scanning route a3, and this scanning pattern formed in a zigzag shape can be repeated depending on necessity.

According to this example, the raster molding path P2 is set with a pitch between the scanning routes a1 and a2 on the outside and the inside such that the scanning routes a1 and a2 adjacent on the inside and outside are made to contact. In other words, the pitch is a substantially the same size as a radiation diameter of a light beam or an electron beam.

Radiation of the light beam or electron beam by a light beam or electron beam oscillator (not illustrated) and a light beam or electron beam scanning unit 20 is continuously executed along the raster molding path P2 without being turned OFF.

Therefore, according to the example illustrated in FIG. 4, the waiting time for the position adjustment and the like can be reduced, and the molding time can be shortened in the same way as in the foregoing examples.

### Example 4 (according to the invention)

According to an example illustrated in FIG. 5(b), a distance between scanning routes a1 and a2 of the raster molding path P2 adjacent each other is set wider in contrast to a spiral raster molding path P2 shown above (see FIG. 5(a)), and the distance is set to be larger than a radiation diameter of a light beam or an electron beam (e.g., about 200 µm) and smaller than 10 times of the radiation diameter.

The above-specified range of the distance is experimentally-acquired through trial and error by the inventors of the present invention. In the case of setting the distance smaller than the above-specified range, the temperature distribution may be uneven because of a temperature increase or the like between the scanning routes a1, a2 adjacent in an intersecting direction, and a shape deformation, such as warpage, may occur in a plastic object M with high possibility. Also, in the case of setting the distance larger than the above-specified range, sintering density between the scanning routes a1, a2 adjacent each other may become small, thereby very probably causing a quality deterioration of the plastic object M.

Therefore, according to the example illustrated in FIG. 5(b), the waiting time for the position adjustment and the like can be reduced, and the molding time can be shortened. Additionally, it is possible to avoid an uneven temperature distribution and the occurrence of a shape deformation, such as warpage, in the plastic object M due to a temperature increase between the scanning routes a1, a2 adjacent each other or due to an extended molding path.

Note that a scanning direction of the raster molding path P2 in the example illustrated in FIG. 5(b) can be formed spirally and directed from a center portion to a contour of a region to be molded E in the same manner as an example illustrated in FIG. 3.

### Example 5 (according to the invention)

According to an example illustrated in FIG. 6(b), a distance between scanning routes a1, a3 of the raster molding path P2 adjacent each other is set wider in contrast to a zigzag-formed raster molding path P2 illustrated above (see FIG. 6(a)), and the distance is set to be larger than a radiation diameter of a light beam or an electron beam (e.g., about 200 µm) and smaller than 10 times of the radiation diameter.

Therefore, according to the example illustrated in FIG. 6(b), the waiting time for the position adjustment and the like can be reduced, and the molding time can be shortened. Additionally, it is possible to avoid an uneven temperature distribution and the occurrence of a shape deformation, such as warpage, in the plastic object M due to a temperature increase between the scanning routes a1, a3 adjacent each other or due to an extended molding path.

Meanwhile, according to the above example, the radiation of the light beam or electron beam is separately executed for each of the vector molding path P1 and the raster molding path P2, but there is another example in which the radiation of the light beam or electron beam corresponding to the vector molding path P1 can be omitted by forming an outer peripheral portion of the spiral raster molding path P2 along a contour of a region to be molded E.

Further, according to an example illustrated in FIG. 1, a single light beam or electron beam scanning unit 20 is provided, but there is another example in which a plurality of light beam or electron beam scanning units 20 are provided and a plurality of light beams or electron beams are radiated by these light beam or electron beam scanning units 20 to the region to be molded E for scanning.

Moreover, there is still another example in which a molding path is set by suitably combining the molding paths illustrated in FIGS. 2 to 6(b) in a single region to be molded, and the light beam or electron beam radiation can be continuously radiated along this molding path without interruption on the way.

### APPLICABILITY OF THE INVENTION

As is obvious from the above described embodiments and examples, the present invention can industrially exert a great deal of utility value in the fields of three-dimensional molding because the present invention can improve molding efficiency and avoid shape deforming of a plastic object M.

### EXPLANATION OF THE REFERENCES

10: Molding table
20: Light beam or electron beam scanning unit
30: Controller
40: Powder supply equipment
E: Region to be molded
M: Plastic object
P1: Vector molding path
P2: Raster molding path
a1 to a4: Scanning route

## Claims

1. A method for manufacturing a three-dimensionally shaped plastic object comprising:
a laminating process to form a powder layer by supplying powder material; and
a sintering process to radiate a light beam or an electron beam to the powder layer and move a location radiated by the light beam or the electron beam to sinter the powder layer, wherein the laminating process and the sintering process are configured to alternately repeat, and wherein the sintering process for a respective powder layer comprises:
setting a vector molding path (P1) for scanning a region to be molded (E) along a contour thereof by the light beam or electron beam, wherein the vector molding path (P1) is a continuous route formed in an endless ring along the contour of the region to be molded (E); and
setting a raster molding path (P2) for scanning an inner region of the region to be molded (E) by the light beam or electron beam so as to hatch the mentioned region, wherein the raster molding path (P2) is a continuous route which does not pass the same line and does not form any intersection,
wherein between two adjacent straight lines or curve lines of the raster molding path (P2), a distance is set to be larger than a radiation diameter of the light beam or the electron beam and smaller than 10 times of the radiation diameter.

2. The method according to claim 1, wherein the raster molding path (P2) is arranged such that a plurality of straight lines (a1, a2, a3, a4) is connected at a predetermined angle and sequentially directed to the inside or sequentially directed to the outside, or arranged such that a single continuous curve line is sequentially directed to the inside or sequentially directed to the outside.

3. The method according to claim 1, wherein the raster molding path (P2) includes a scanning pattern formed of a first scanning route directed from one side to the other side, a second scanning route continued from the first scanning route and directed in a direction away from the first scanning route at a predetermined angle with respect to the first scanning route, a third scanning route continued from the second scanning route and directed from the other direction to the one direction at a predetermined angle with respect to the second scanning route, and a fourth scanning route continued from the third scanning route and directed in a direction away from the third scanning route at a predetermined angle with respect to the third scanning route, and further this scanning pattern can be repeatedly arranged.

4. A three-dimensional molding equipment comprising:
a controller (30);
a powder supply equipment (40) controlled by the controller (30) and configured to perform a laminating process to form a powder layer; and
a light beam or electron beam scanning unit (20) controlled by the controller (30) and configured to perform a sintering process in accordance with the method of one of claims 1 to 3.

## Patentansprüche

1. Verfahren zum Herstellen eines dreidimensional geformten Kunststoffgegenstands umfassend:
einen Schichtprozess zum Bilden einer Pulverschicht durch Zuführen von Pulvermaterial; und
einen Sinterprozess zum Bestrahlen eines Lichtstrahlenbündels oder eines Elektronenstrahlenbündels auf die Pulverschicht und zum Bewegen einer durch das Lichtstrahlenbündel oder das Elektronenstrahlenbündel bestrahlten Stelle, um die Pulverschicht zu sintern, wobei der Schichtprozess und der Sinterprozess dazu konfiguriert sind, sich abwechselnd zu wiederholen, und wobei der Sinterprozess für eine jeweilige Pulverschicht umfasst:
Einstellen eines Vektorformpfads (P1) zum Abtasten eines zu formenden Bereichs (E) entlang eines Umfangs von diesem durch das Lichtstrahlenbündel oder Elektronenstrahlenbündel, wobei der Vektorformpfad (P1) eine kontinuierliche Strecke ist, die in einem endlosen Ring entlang des Umfangs des zu formenden Bereichs (E) gebildet ist; und
Einstellen eines Rasterformpfads (P2) zum Abtasten eines inneren Bereichs des zu formenden Bereichs (E) durch das Lichtstrahlenbündel oder Elektronenstrahlenbündel, um den erwähnten Bereich zu schraffieren, wobei der Rasterformpfad (P2) eine kontinuierliche Strecke ist, die nicht durch die gleiche Linie hindurchgeht und keine Schnittstelle bildet,
wobei zwischen zwei angrenzenden geraden Linien oder Kurvenlinien des Rasterformpfads (P2) ein Abstand dazu eingestellt ist, größer als ein Strahlungsdurchmesser des Lichtstrahlenbündels oder Elektronenstrahlenbündels und kleiner als das 10-Fache des Strahlungsdurchmessers zu sein.

2. Verfahren nach Anspruch 1, wobei der Rasterformpfad (P2) derart angeordnet ist, dass eine Vielzahl von geraden Linien (a1, a2, a3, a4) in einem vorgegebenen Winkel verbunden ist und sequentiell nach innen gerichtet oder sequentiell nach außen gerichtet ist, oder derart angeordnet ist, dass eine einzelne kontinuierliche Kurvenlinie sequentiell nach innen gerichtet oder sequentiell nach außen gerichtet ist.

3. Verfahren nach Anspruch 1, wobei der Rasterformpfad (P2) ein Abtastmuster umfasst, das aus einer ersten Abtaststrecke, die von einer Seite zu der anderen Seite gerichtet ist, einer zweiten Abstaststrecke, die von der ersten Abtaststrecke fortgesetzt und in einer Richtung weg von der ersten Abtaststrecke in einem vorgegebenen Winkel in Bezug auf die erste Abtaststrecke gerichtet ist, einer dritten Abtaststrecke, die von der zweiten Abtaststrecke fortgesetzt und von der anderen Richtung in die eine Richtung in einem vorgegebenen Winkel in Bezug auf die zweite Abtaststrecke gerichtet ist, und einer vierten Abtaststrecke gebildet ist, die von der dritten Abtaststrecke fortgesetzt und in eine Richtung weg von der dritten Abtaststrecke in einem vorgegebenen Winkel in Bezug auf die dritte Abtastroute gerichtet ist, und ferner dieses Abtastmuster wiederholt angeordnet sein kann.

4. Dreidimensionalformungsausrüstung umfassend:
eine Steuereinrichtung (30);
eine Pulverzuführausrüstung (40), die durch die Steuereinrichtung (30) gesteuert und dazu konfiguriert ist, einen Schichtprozess durchzuführen, um eine Pulverschicht zu bilden; und
eine Lichtstrahlenbündel- oder Elektronenstrahlenbündel-Abtasteinheit (20), die durch die Steuereinrichtung (30) gesteuert ist und dazu konfiguriert ist, einen Sinterprozess gemäß dem Verfahren nach einem der Ansprüche 1 bis 3 durchzuführen.

## Revendications

1. Procédé de fabrication d'un objet en plastique de forme tridimensionnelle comprenant :
un processus de stratification pour former une couche de poudre en fournissant du matériau poudre ;
et
un processus de frittage pour émettre un faisceau de lumière ou un faisceau d'électrons sur la couche de poudre et déplacer la position irradiée par le faisceau de lumière ou le faisceau d'électrons afin de fritter la couche de poudre, dans lequel le processus de stratification et le processus de frittage sont configurés pour se répéter alternativement et dans lequel le processus de frittage pour une couche de poudre respective comprend :
la définition d'un parcours de vecteur de moulage (P1) pour balayer la région à mouler (E) le long d'un contour de celui-ci par le faisceau de lumière ou le faisceau d'électrons, dans lequel le parcours de vecteur de moulage (P1) est une route continue formée dans un cercle infini le long du contour de la région à mouler (E) ; et
la définition d'un parcours de trame de moulage (P2) pour balayer une région interne de la région à mouler (E) par le faisceau de lumière ou le faisceau d'électrons de sorte à hachurer la région mentionnée, dans lequel le parcours de trame de moulage (P2) est une route continue qui ne passe pas sur la même ligne et ne forme aucune intersection,
dans lequel entre deux lignes droites ou deux lignes courbes adjacentes du parcours de trame de moulage (P2), une distance est définie pour être plus large que le diamètre de radiation du faisceau de lumière ou du faisceau d'électrons et plus petit que dix fois le diamètre de radiation.

2. Procédé selon la revendication 1 dans lequel le parcours de trame de moulage (P2) est conçu de sorte qu'une pluralité de lignes droites (a1, a2, a3, a4) est connectée à un angle prédéterminé et dirigé séquentiellement vers l'intérieur ou dirigé séquentiellement vers l'extérieur, ou conçu de sorte qu'une seule ligne courbe continue est dirigée séquentiellement vers l'intérieur ou dirigée séquentiellement vers l'extérieur.

3. Procédé selon la revendication 1 dans lequel le parcours de trame de moulage (P2) comprend un modèle de balayage formé d'une première route de balayage dirigée depuis un côté vers l'autre côté, une seconde route de balayage continue depuis la première route de balayage et dirigée dans une direction éloignée de la première route de balayage à un angle prédéterminé par rapport à la première route de balayage, une troisième route de balayage continue depuis la seconde route de balayage et dirigée depuis l'autre direction vers la direction à un angle prédéterminé par rapport à la seconde route de balayage et une quatrième route de balayage continue depuis la troisième route de balayage et dirigée dans une direction éloignée de la troisième route de balayage à un angle prédéterminé par rapport à la troisième route de balayage et ce modèle de balayage peut également être conçu de manière répétée.

4. Equipement de moulage tridimensionnel comprenant :
un contrôleur (30) ;
un équipement de fourniture de la poudre (40) commandé par le contrôleur (30) et configuré pour réaliser le processus de stratification pour former une couche de poudre ; et
une unité de balayage à faisceau de lumière ou faisceau d'électrons (20), commandée par le contrôleur (30) et configurée pour réaliser le processus de frittage conformément au procédé de l'une des revendications 1 à 3.
